# EUROPEAN PATENT APPLICATION

(11) **EP 1 520 474 A1**
(43) Date of publication of application: **06.04.2005**
(21) Application number: 03022143.6
(22) Date of filing: 30.09.2003
(51) Int. Cl.: A21B 5/03, A21C 15/02

(54) **Machine and process for mass-producing sandwich pancakes**

(71) Applicant: SHIN NIHON MACHINE MFG. CO., LTD., Tokorozawa Saitama, 359-1152 (JP)
(72) Inventor: Endo, Toyohiko, Tokorozawa Saitama, 359-1152 (JP)
(74) Representative: Banzer, Hans-Jörg, Dipl.-Ing.

(57) **Abstract**

A sandwich pancake machine (10) comprises a baking plate conveyor (20), to which a plurality of baking plates (23) are circularly coupled and which travels along a circulation path, a dough depositor (30) for depositing a suitable quantity of dough at predetermined positions on a surface of the baking plate (23), a turn-over device (80) for turning over the dough of which one face has been baked by baking plate (23), whereby the opposite face is subjected to direct contact with the baking plate (23) and a scraper (100) for removing the baked dough (single pancake) off the baking plate (23). Since the dough depositor (30) is capable of moving synchronously with the baking conveyor (20), dough can be deposited on a constant position on the baking plate (23) while a dough material is deposited one time. Therefore, the uniform-shaped dough can be mass-produced.

## Description

### Field of the Invention

The present invention relates to a machine and process for mass-producing sandwich pancakes. Commonly, pancakes are a sort of confectionery produced by baking a dough, which is a mixture of flour, butter, egg, sugar, water and the like. This invention specifically refers to a cake which is made of a pair of baked dough, sandwiching a filling, such as jam, cream and the like in between.

### Background of the Invention

A process for mass-producing such sandwich pancakes generally comprises following steps.
(1) A baking step for baking both sides of a dough which is a mixture of flour, butter, egg, sugar, water and the like on a baking plate in a conveyor( a baking plate conveyor).
(2) A filling depositing, sandwiching and edge-sealing step for sandwiching a filling, such as jam, cream and the like, between a pair of baked dough.

A machine for such steps is disclosed in Japanese Patent No. 3425264, for example. In the disclosed machine, in the first place, one side of the dough to be an outer face of a sandwich pancake is subjected to direct contact with the baking plate as to be baked sufficiently, while the opposite side of the dough to be an inner face of a sandwich pancake is baked in a non-contacted manner. Then, the dough is turned over so that the opposite side of the dough is subjected to direct contact with the baking plate. However, the time in which the opposite side is contacted to the baking plate is so short that the opposite side, particularly the periphery thereof, is not baked sufficiently. Moreover, at the end of the baking step, since insufficiently baked side of the dough is contacted to the baking plate, these sides of the dough tend to stick to the baking plate.

The dough has to be removed off the baking plate when proceeding to the filling depositing, sandwiching and edge-sealing step from the baking step. At this time, the dough should fall off the baking plate by gravity as the baking plate is downwardly moved at the end of the baking step. But, since insufficiently baked side of the dough is contacted to the baking plate, it is difficult to remove the dough off the baking plate by only moving downwardly the baking plate. Accordingly, necessary number of baked dough may not be supplied to the next filling depositing, sandwiching and edge-sealing step. Therefore, in the sandwich pancake producing process of the prior art, air is injected between the dough and the baking plate in order to remove certainly the dough off the baking plate.

By the way, there are various requirements otherwise the above-described problem in order to steadily mass-produce the sandwich pancakes. For instance, producing uniform-size of dough requires dough to be evenly deposited on the baking plate. And, the baked dough( single pancake) has to be aligned at a suitable position to deposit a filing at the center of one of the baked dough and sandwich them. In addition, in order to bake all the dough uniformly, conditions of the baking plate, such as the surface temperature of the baking plate, coating condition of oil on the baking plate surface and the like, must be held at uniform. It is necessary to improve the prior machine to satisfy these requests.

### Summary of the Invention

In order to solve the above-mentioned problems, an object of the present invention is provided to a machine and process for mass-producing a large number of sandwich pancakes of quality.

A sandwich pancake machine according to the present invention, comprises a baking plate conveyor having a plurality of baking plates which are circularly coupled and travels along a circulation path; a dough depositor for depositing a suitable quantity of dough at predetermined positions on a surface of said baking plate arranged in a crossing direction to a traveling direction of said baking conveyor, the dough depositor being disposed over said baking plate conveyor; a turn-over device for turning over the dough of which one face( an outer face of a sandwich pancake) has been baked by said baking plate , whereby the opposite face( an inner face of a sandwich pancake) is subjected to direct contact with said baking plate; a scraper for removing the baked dough( single pancake) off said baking plate; a reducer for dividing the group of the removed baked dough into two half groups, one half directing the inner face of the baked dough upward( refer to the inner-face-up baked dough) and another half directing the outer face of the baked dough upward( refer to the outer-face-up dough); a filling depositor for depositing a filling on the inner-face-up dough; a sandwich device for overlaying the outer-face-up dough on the inner-face-up dough deposited with the filling and sandwiching the filling in between the pair of baked dough; and an edge-sealing device for sealing the edge of the overlaid dough; wherein said baking conveyor travels continuously, and said dough depositor and said turn-over device operate while moving synchronously with said baking conveyor.

Since the dough depositor is capable of moving synchronously with the baking conveyor, dough can be deposited on a constant position on the baking plate while a dough material is deposited one time. Therefore, the uniform-shaped dough can be mass-produced. In addition, because the baking conveyor travels continuously, not intermittently, it is possible to suppress vibration and noise generated from the machine.

It is desirable that the machine comprises a spray injection type oil applying device for injecting oil on a surface of said baking plate, and double oil wipers for wiping oil to a surface of said baking plate.

In this case, an amount of oil consumption applied to the baking plate decreases in comparison with a case in which the oil is directly applied by cloth. And, since one of the oil wipers is still operated while another oil wiper is stopped for changing a wiper cloth, it is not necessary to stop the machine for changing a wiper cloth.

Further, it is desirable that the machine comprises a sensor for sensing a temperature of a surface of said baking plate, wherein an amount of gas supplied to a burner for heating said baking conveyor will be controlled, based on the sensed temperature.

In this case, the temperature of the surface of the baking plate can be controlled more accurately than manual control.

Further, it is desirable that the machine comprises a cleaner for removing remaining pieces of the dough off said baking plate.

In this case, the surface of the baking plate is maintained clean.

In the present invention, it is desirable that said reducer carries a plurality of baked dough removed off said baking plate, as being arranged in a row and in a right-angled direction to the traveling direction of said conveyor, the row being divided into a first-half row and a second-half row, each half row having half number of the baked dough, in the first-half row, wherein the baked dough, which was placed in the middle of the row, is inner-face-up( or outer-face-up), in the second-half row, wherein the baked dough, which was placed at left and right edges in the row, was gathered in the middle, the baked dough in the second-half row being outer-face-up( or inner-face-up).

In this case, since a moving distance of the dough for moving the dough placed at the left and right edges to the middle is short, the first-half row and the second-half row can be alternately arranged in a short time. If the half of the dough located at one side would move to far another side, a moving distance of the dough becomes long. As a result, if the dough is moved at a high speed, the dough will be displaced off by inertia.

In addition, since the reducer makes the row of the dough to divide into half, the width of the row becomes half. That enables devices following the reducer to be narrower.

Further, in the present invention, it is desirable that said edge-sealing device and said filling depositor are retractable from said machine.

In this case, since it is easy to clean and inspect the filling depositor and the edge-sealing device, it is preferable for hygienic management.

Further, it is desirable that the machine comprises a bypass conveyor for discharging the baked dough to another position different from said filling depositor.

In this case, if a trouble occurs among following steps after baking, the dough under procedure can be discharged on the half way, for example to a scrap container.

Further, it is preferable that the machine comprises an alcohol applying means for applying alcohol to parts which are directly contact with the dough.

In this case, since the means prevents the baked dough from sticking to the parts, a skin of the baked dough does not peel off so that a product deficiency on appearance can be restrained.

A process for mass-producing sandwich pancakes according to the present invention, comprises the steps of: depositing dough on a surface of a baking plate of a baking conveyor, which a plurality of baking plates are circularly coupled and travels in a circular path, at a plurality of positions arranged at a crossing direction to the traveling direction of said conveyor, the step being carried out by a dough depositor; turning over the dough of which one side is baked by said baking plate in order to be subject the opposite side thereof to direct contact with said baking plate, the step being carried out by a turn-over device; dividing the grope of the baked dough into two half groups, one half directing the inner face of the baked dough upward( refer to the inner-face-up baked dough) and another half directing the outer face of the baked dough upward( refer to the outer-face-up baked dough), after removed off said baking plate; depositing a filling on the inner-face-up baked dough; overlaying the outer-face-up baked dough on the inner-face-up baked dough deposited with the filling and sealing the periphery (edge) of the pair of dough; wherein said baking plate conveyor continuously travels, and said dough depositor and said turn-over device are operated with being synchronously traveled with said baking plate conveyor.

It is preferable that the process comprises a step of controlling an amount of gas supplied to a burner for heating said baking conveyor, based on the temperature of the surface of the baking plate conveyor.

Further, it is preferable that the process comprises a step of applying alcohol to parts which are directly contact with the dough as to prevent sticking the baked dough to the parts.

### Brief Description of the Drawings

Fig.1 is a block diagram showing an outline of the sandwich pancake machine according to the present invention.
Fig.2 is a side elevation drawing showing a structure of the baking station.
Fig.3 is a schematically drawing showing a structure of the baking station.
Fig.4 is a cross-sectional drawing schematically showing the turn-over device.
Fig.5 is a drawing showing a way of turning over the dough.
Fig.6 is a drawing enlarged showing the vicinity of the downstream pulley of the baking conveyor.
Fig.7 is a drawing showing the structure of the cleaner.
Fig.8 is an elevation drawing showing a structure of the oil wipers.
Fig.9 is a perspective drawing showing a whole structure of the reducer.
Fig. 10 is a cross sectional drawing schematically showing a whole structure of the reducer.
Fig.11 is a plane drawing showing a part of the structure of the reducer.
Fig.12 is a drawing explaining a way of inverting the pancake in the inverting unit.
Fig. 13 is a drawing explaining a first alignment device, Fig.13A is a cross-sectional drawing partially showing the first alignment device, Fig.13B is a plane drawing showing the first alignment device.
Fig. 14 is an elevation drawing showing a structure of the center-sift unit.
Fi.15 is a cross-sectional drawing showing a structure of the center-shift unit.
Fig. 16 is a drawing showing a structure of a filling and sandwiching unit in the filling, sandwiching and edge-sealing station.
Fig. 17 is a drawing showing a structures of an edge-sealing unit in the filling, sandwiching and edge-sealing station.
Fig.18 is a drawing showing a way of depositing the filling.
Fig.19 is a drawing showing a way of retracting the filling depositor from the machine.
Fig.20 is a drawing explaining a way of processing a pancake.
Fig.21 is a drawing explaining an operation timing of each device in the filling, sandwiching and edge-sealing station.
Fig.22 is an elevation drawing showing a structure of the edge-sealing device.
Fig.23 is a drawing showing the structure of the pancake discharge mechanism.
Fig.24 is a drawing showing a shape of a sandwich pancake, Fig.24A is a perspective drawing showing the whole shape of the sandwich pancake and Fig.24B is a cross-sectional perspective drawing showing the sandwich pancake.

### Detailed Description of Embodiment of the Invention

The preferred embodiments of the present invention will be described in detail with reference to the accompanying drawings.

First, an example of a sandwich pancake, which shall be produced by a sandwich pancake machine according to the present invention, will be explained.

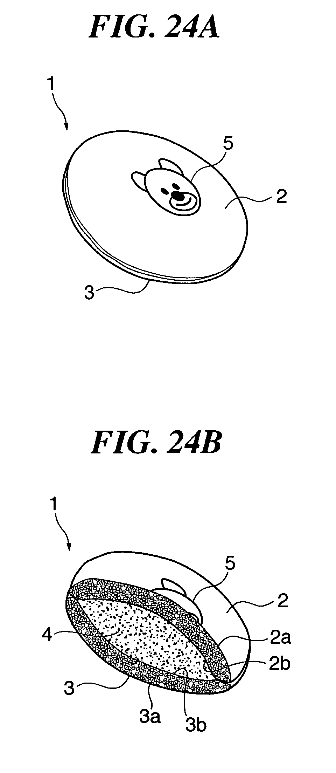

Fig.24 is a drawing showing a shape of a sandwich pancake, Fig.24A is a perspective drawing showing the whole shape of the sandwich pancake and Fig.24B is a cross-sectional perspective drawing showing the sandwich pancake.

A sandwich pancake 1 has an upper single pancake (an upper baked dough) 2, a lower single pancake( a lower baked dough) 3 and a filling 4 in between the two single pancakes 2, 3. The pancakes 2, 3 are made by baking a mixture( dough) of flour, butter, egg, sugar, water and the like. As the filling 4, jam, cream and the like may be available. As shown in Fig.24B, the filling 4 is centrally filled between the two pancakes 2, 3, and the two pancakes 2 3 are overlaid each other and sealed at these edge( periphery).

The both outer faces 2a and 3a of the sandwich pancake 1 show a uniform baked color all over the faces, while the both inner faces 2b and 3b( the faces contacted with the filling 4) show a brindled baked color in the center of the faces. In addition, the outer face 2a of the upper pancake 2 is stamped with a design 5.

Next, a sandwich pancake machine according to the present invention will be explained.

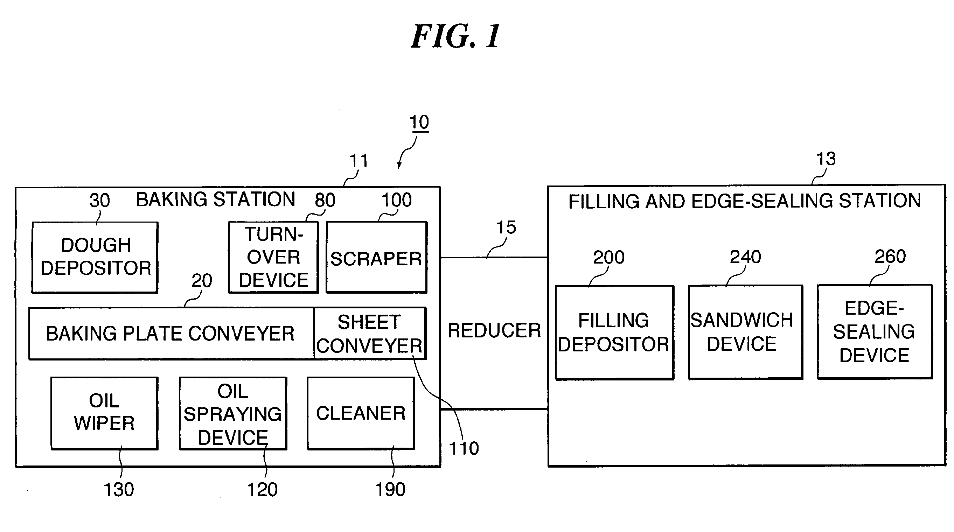

Fig.1 is a block diagram showing an outline of the sandwich pancake machine according to the present invention.

First, the structure of the sandwich pancake machine 10 will be explained in brief.

The sandwich pancake machine 10 is mainly provided with a baking station 11 for depositing dough and baking the dough to make a pancake, and a filling depositing, sandwiching and edge-sealing station 13 for sandwiching a pair of pancakes with a filling in between. In addition, between the baking station 11 and the filling, sandwiching and edge-sealing station 13, a reducer 15 is equipped.

In the accompanying drawings, a traveling direction shows a direction from an upstream, shown in the left side in the figures, to a downstream, shown in the right side in the figures. A traverse direction shows a crossing direction to the traveling direction. Here, the left direction shows the left and the right direction shown the right, in viewing from the upstream to the downstream.

The baking station 11 has a baking plate conveyor 20 traveling along a circular path, and a sheet conveyor 110 disposed at the downstream of the baking plate conveyor 20. Above the baking plate conveyor 20, a dough depositor 30 for depositing dough material on the baking plate conveyor 20, a turn-over device 80 for turning over the dough of which one face is baked so that the other face of the dough is subject to contact with the baking plate conveyor, a scraper 100 for removing the baked dough ( the pancake) off the baking plate conveyor are arranged in order from the upstream.

And, under the baking plate conveyor 20, a cleaner 190, an oil spray device 120, double oil wipers 130 are arranged in order.

The filling depositing, sandwiching and edge-sealing station 13 has a filling depositor 200 for depositing filling on a pancake, a sandwich device 240 for overlaying a pancake on other pancake deposited with the filling and sandwiching the filling in between the pair of pancakes, a edge-sealing device 260 for sealing the pair of pancakes at the periphery ( edge ) are arranged in order.

The detail of each device will be explained. First, the baking station 11 will be explained.

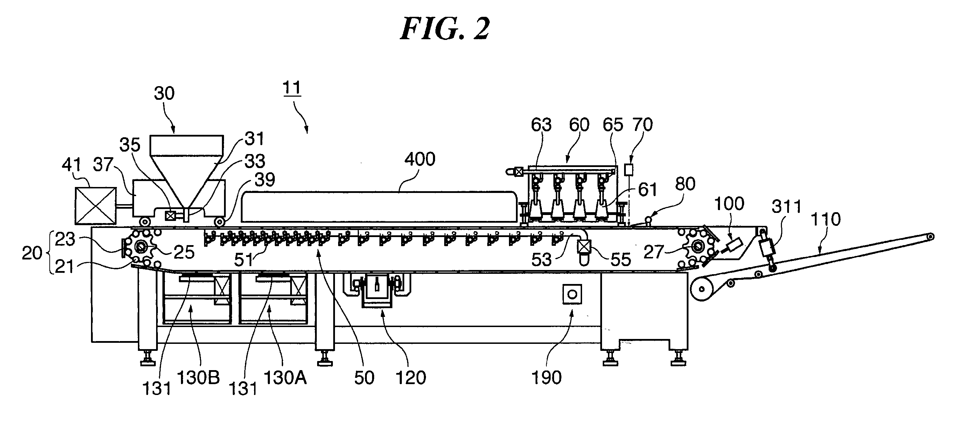

Fig.2 is a side elevation drawing showing a structure of the baking station.

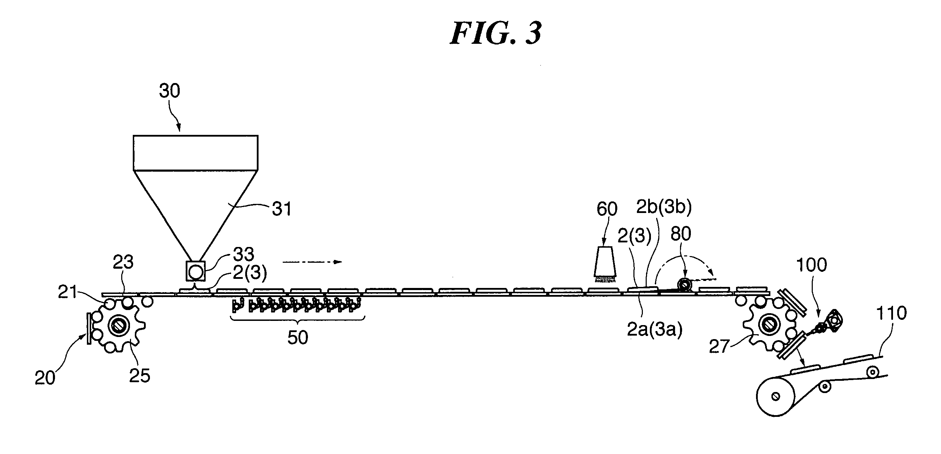

Fig. 3 is a schematically drawing showing a structure of the baking station.

The baking plate conveyor 20 has a plurality of rectangle-shaped baking plates 23, which extends to the traverse direction, the plates 23 being coupled like a caterpillar and mounted on an endless chain belt 21. The chain belt 21 is wound around an upstream pulley 25 and a downstream pulley 27. The downstream pulley 27 is connected to a servomotor (not shown). While the motor is rotating, the chain belt 21 continuously moves along a circulation path between the pulley 25 and 27 and also the baking plate 23 is traveling. The continuously traveling of the baking plate conveyor 20 prevents from generating noise and vibration, which an intermittent traveling tends to generate. The baking plate conveyor 20 travels at a speed of 2.5 m/min, for instance. Incidentally, the traveling speed is changeable according to a kind of dough preparation.

Both sides of the baking plate conveyor 20, are provided with covers 400.

The baking plate 23 is made of cupper and has a size of 147 mm in length ( a length to the traveling direction), 1260 mm in width( a length to the traverse direction) and 15 mm in thickness. On the baking plate 23 having the above size, twelve of pancakes each having a diameter of 80 mm are placed.

In the following description, the case in which twelve pancakes are placed on the baking plate will be explained.

At the most upstream of the baking plate conveyor 20, the dough depositor 30 is equipped. The dough depositor 30 has a hopper 31 in which dough material ( a mixture of flour, butter, egg, sugar, water and the like) in a pastry form is filled. The hopper 31 is placed over across the baking plate 23. At a bottom of the hopper 31, twelve nozzles 33 are distributed the traverse direction. Each of the nozzles 33 has a press cylinder 35 which draws a suitable quantity dough from the hopper 31 and deposits the drawn dough from an opening of the nozzle 33 out on the baking plate 23. Since the fluidity of the dough is relatively small, the dough is deposited on the baking plate 23 such that a face of the dough contacted to the baking plate 23 becomes flat and the opposite face becomes convex.

The proximal part of the hopper 31 is mounted to a carriage 37. The carriage 37 is placed via rollers 39 on a guide( not shown) extending to the traveling direction. The carriage 37 is movable to forwards and backwards to the traveling direction by operating an actuator 41 connected thereto.

The carriage 37 synchronously moves with the baking plate conveyor 20 to the traveling direction at the same speed as the traveling speed of the baking plate conveyor 20. Therefore, the hopper 31 is movable at the same speed as the traveling speed of the baking plate conveyor 20 so that a relative position between the hopper 31 and the baking plate 23 is constant. Accordingly, as shown in Fig.3, it is possible that the dough will be deposited on a constant position on the baking plate 23 from the nozzle 33 of the hopper 31 during one procedure. As a result, the dough can be deposited in a circular shape. Moreover, a large number of dough having a uniform size will be successively deposited.

After depositing a suitable quantity of dough, the hopper 31 moves to backwards to the traveling direction and returns to the original position, thereby to get ready for depositing dough on the next baking plate 23.

As shown in Fig.2, under the upper path in the traveling path of the baking plate conveyor 20, a plurality of lower gas burners 50 are equipped. The burner heads 51 of the lower gas burners 50 are distributed in the full length to the transverse direction. Each of the lower gas burners 50 is closer disposed at the upstream than those at the downstream, as shown in Fig.2. The amount of gas applied to the lower gas burner 50 is automatically controlled by an automatic flow regulating valve 55 mounted on a gas pipe 53.

At the downstream of the lower gas burners 50, the upper far infrared radiation gas heaters 60 are equipped over the upper path in the traveling path of the baking plate conveyor 20. The burner heads 61 of the upper far infrared radiation gas heaters 60 are also distributed in the full length to the transverse direction. The length of the upper heaters 60 is shorter than the length of the lower gas burners 50 in the traveling direction. The amount of gas applied to the upper heater 50 is manually controlled by a flow regulating valve 65 mounted on a gas pipe 63.

At the downstream of the upper far infrared radiation heater 60, an infrared thermometer 70 is mounted, which detects a temperature of a surface of the baking plate 23 in a non-contact manner. Based on the detected temperature, the flow regulating valve 55 of the lower gas burners 50 will be adjusted automatically. Therefore, it is possible to control the temperature of the surface of the baking plate 23 more accurately than a manual control. On the other hand, the flow regulating valve 65 of the upper far infrared radiation gas heater 60 is manually adjusted by visually judging colors of the baked dough.

Referring to Fig.3, the dough in the baking station will be explained.

The dough 2 (3) is baked by the baking plate 23 heated by the lower gas burner 50 and the upper far infrared radiation gas heater 60. As a result, one face of the dough contacted to the baking plate 23 is baked by the baking plate 23 to show a uniform baked color, the face will form the outer faces 2a and 3a of the sandwich pancake 1. On the other hand, the opposite face of the dough is baked by the upper far infrared radiation gas heater 60 such that small air holes are formed thereon, but not baked sufficiently for giving a baked color, the opposite face will form the inner faces 2b and 3b of the sandwich pancake 1.

Then, for the purpose that the inner face( the opposite face) is subject to contact to the baking plate for improving tastes, plumping the dough, and removing stickiness of the dough, the turn-over devise 80 is provided at the downstream of the upper far infrared radiation gas burners 60.

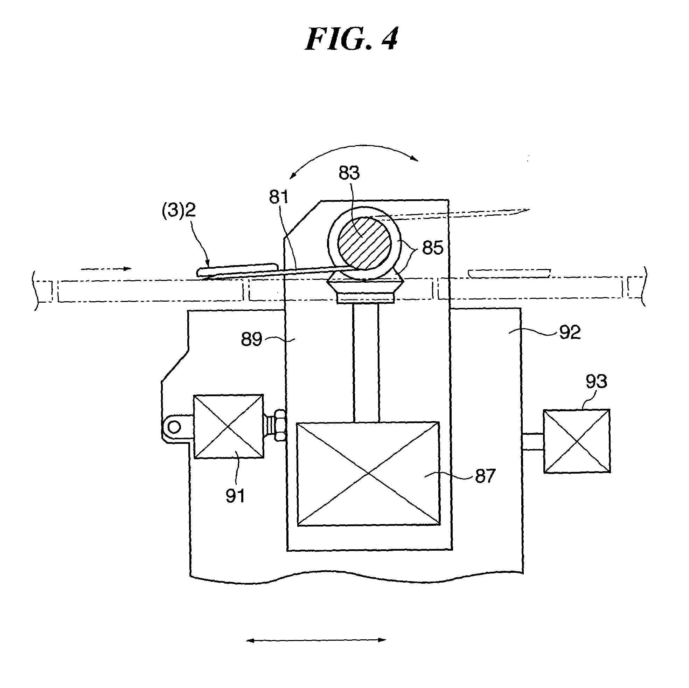

Fig.4 is a cross-sectional drawing schematically showing the turn-over device.

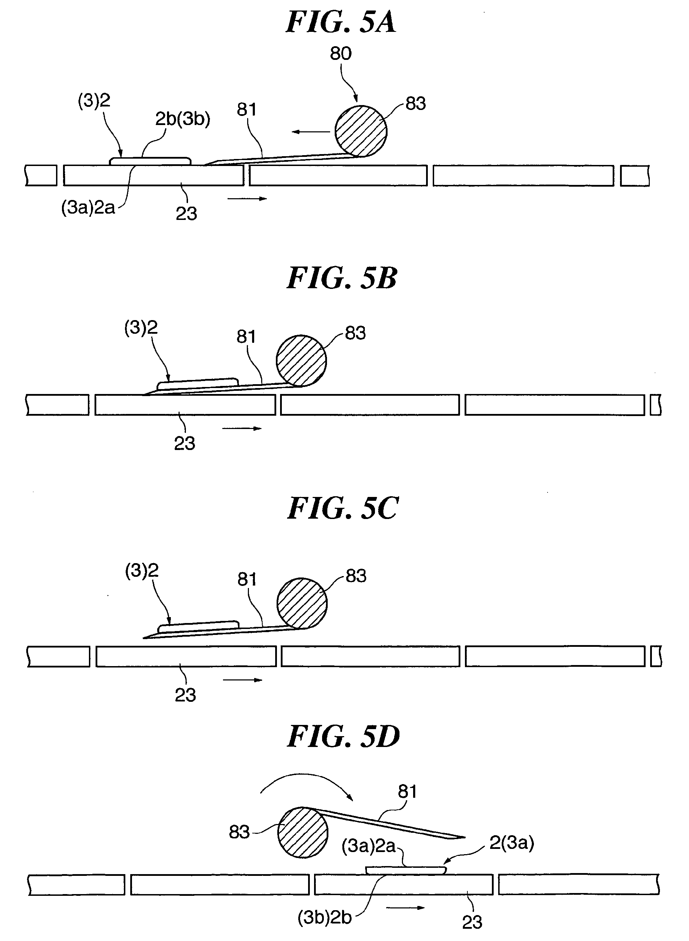

Fig.5 is a drawing showing a way of turning over the dough.

The turn-over device 80 serves as to get the inner face of the dough contact with the baking plate 23 and has twelve of plates 81 distributed in the traverse direction. Each proximal end of the plates 81 is fixed to an axis 83 extending to the traverse direction. A rotary actuator 87 is connected to the axis 83 via a miter gear 85. Rotation of the axis 83 makes each of the plates 81 to be rotated to forwards and backwards to the traveling direction along the axis 83. The axis 83 and the actuator 87 are mounted to a side-plate 89 connected to a pre-rotatable actuator 91.

The actuator 91 is fixed to a casing 92, which is movable forwards and backwards to the traveling direction by activating a servomotor 93 connected thereto.

Referring to Fig.5, a way to turn over the dough by the turn-over device 80 will be explained.

When the baking plate 23 on which the dough 2 (3) baked by the far infrared radiation heater 60 are placed, reaches to a predetermined position, as shown in Fig. 5A, the front edge of each of the plates 81 will be slid under each of the dough 2(3). At the same time, the casing 92 moves backwards to the traveling direction by activating the servomotor 93. In other words, the axis 83 moves reverse to the traveling direction while synchronizing with the baking conveyor 20. This enables to place the dough 2 (3) completely on the plate 81 in a short time, as shown in Fig.5B. After placing the dough 2(3) on the plate 81 completely, as shown in Fig.5C, the axis 83 with the plate 81 is lifted. Then, the axis 83 is rotated to the traveling direction by activating the actuator 87, thereby the dough 2(3) to be turned over upside down. As shown in Fig.5D, the turned dough 2(3) is placed on another baking plate 23 next to the baking plate on which the dough were placed first. Here, the inner face 2b (3b) of the dough 2(3) is directed downward to be contacted with the baking plate 23, and the outer face 2a (3a) is directed upward.

The turned dough 2 (3) is carried by the baking conveyor 20 up to the downstream pulley 27, as shown in Fig.2 and Fig.3. Although any burner and heater is not disposed between the turn-over device 80 and the downstream pulley 27, since the temperature of the baking plate 23 is kept high, the inner face 2b (3b) of the dough 2 (3) is baked such that a brindled baked color is given.

Then, the baked dough 2(3) is transferred to the sheet conveyor 110 from the baking conveyor 20. When the baking conveyor 20 rotates downwardly along the downstream pulley 27, the dough 2(3) should fall on the sheet conveyor 110 off the baking plate 23 by gravity. By the way, after turned over by the turn-over device 80, the inner face of the baked dough 2(3) will be contacted with the baking plate 23. Although the inner face 2b( 3b) has been baked by the upper far infrared radiation gas heater 60 in a non-contact manner and baked by the baking plate 23 in a direct-contact manner, the baking time is so short that the inner face 2b( 3b) is not baked sufficiently. Therefore, since insufficiently baked inner face 2b( 3b) easily sticks to the baking plate 23, the dough 2(3) may not fall off the baking plate 23 by only the downwardly movement of the baking plate along the downstream pulley 27 at the end of the baking plate conveyor 20.

Consequentially, the scraper 100 is prepared at the downstream of the downstream pulley 27 of the baking conveyor 20 to remove the baked dough 2 (3) off the baking plate 23.

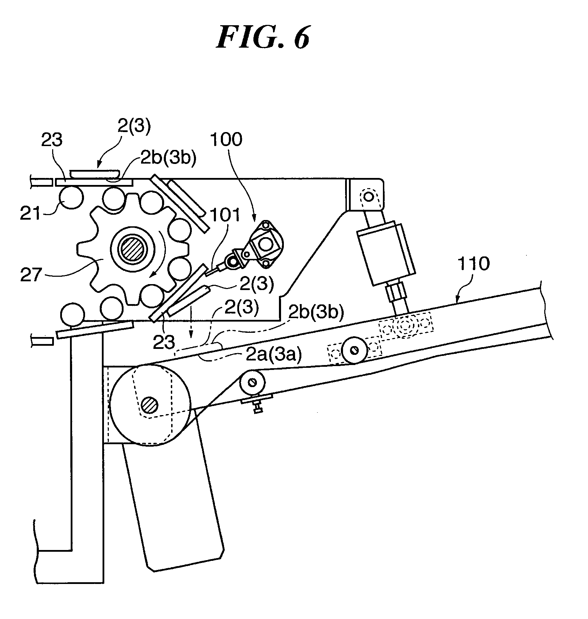

Fig.6 is a drawing enlarged showing the vicinity of the downstream pulley of the baking conveyor.

The twelve of scrapers 100 are equipped to the traverse direction. Each of the scrapers 100 has a nozzle 101 for injection air. Each of the nozzles 101 is so positioned that air is injected to the tangential direction to the surface of the baking plate 23 which downwardly moves along the downstream pulley 27.

An air injection between the baking plate 23 and the inner face 2b (3b) of the baked dough 2 (3) will blow the baked dough 2(3) off the baking plate 23. The blown-off baked dough ( the pancake) 2(3) falls onto the sheet conveyor 110 upside down. Thus, on the sheet conveyor 110, the inner faces 2b( 3b) of the pancakes 2 ( 3) direct upward, and the outer faces 2b (3b)of the baked pancakes 2(3)direct downward. The sheet conveyor 110 intermittently travels, and is inclined upwardly.

As shown in Fig.2, under the baking conveyor 20, the cleaner 190, the oil spray device 120 and double oil wipers 130A, 130B are arranged from the upstream hand( here, the upstream shows the right hand in the figure) in order

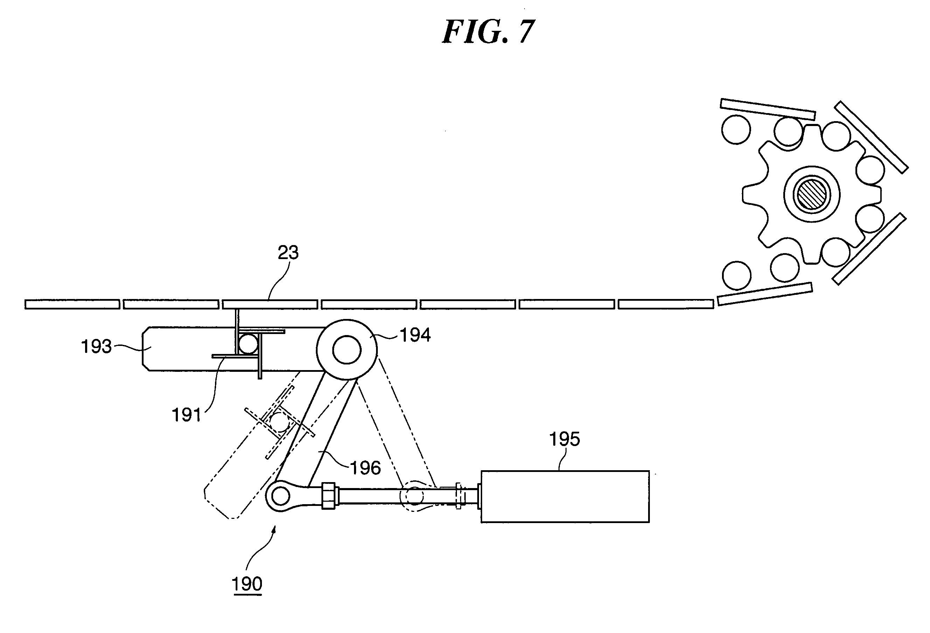

Fig.7 is a drawing showing the structure of the cleaner.

The cleaner 190 is equipped at the most upstream of the lower path in the traveling path of the baking conveyor 20. The cleaner 190 has a rotating brush 191 disposed so as to contact with the surface of the baking plate 23. The rotation of the rotating brush 191 removes residue of baked dough particles stuck on the surface of the baking plate 23.

The rotating brush 191 is mounted in a retractable manner off the surface of the baking plate 23. That is to say, the rotating brush 191 is mounted to an arm 193 fixed to an axis 194. The rotation of the arm 193 along the axis 194 moves the rotating brush 191 between a position to contact with the surface of the baking plate 23 and a position retracted from the surface of the baking plate 23. The axis 194 is rotated by a piston-cylinder 195 connected thereto via a link 196. By retracting the rotating brush 191 off the surface of the baking plate 23, it is easy to replace and clean the brush 191.

As shown in Fig.2, the oil spray device 120 is equipped in the center of the lower path in the traveling path of the baking conveyor 20. The oil spray device 120 has a plurality of nozzles distributed to the traverse direction, from which oil is sprayed on the surface of the baking plate 23. The oil spray device 120 is retractable from the machine 10, and thus the nozzle can be easily inspected.

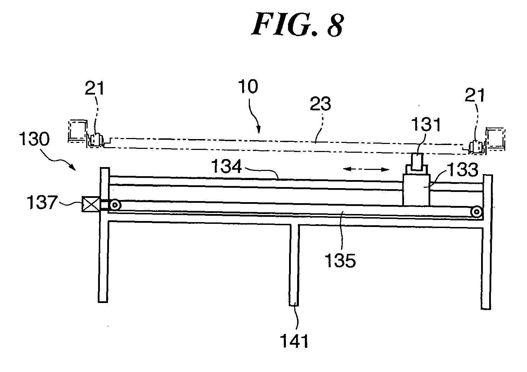

Fig.8 is an elevation drawing showing a structure of the oil wipers.

The oil wipers 130A, 130B are equipped in parallel to the traverse direction. Each of the oil wipers 130 is provided with a wiper cloth 131. The wiper cloth 131 is mounted to a slider 133 fixed to a chain belt 135, which is traveled to the traverse direction by a motor 137. When the chain belt 135 is activated by the motor 137, the slider 133 is moved along a linier guide 134 extending to the traverse direction. As a result, the wiper cloth 131 moves in contact with the surface of the baking plate 23, whereby the surface of the baking plate 23 will be uniformly coated with oil from one end to another end. Such oil coating is carried out while the baking plate conveyor 20 is traveling continuously. Moving the chain belt 135 at a high speed is capable of moving the wiper cloth 131 from one end to other of the surface of the baking plate, even though the baking plate conveyor 20 is traveling continuously.

As described above, after spraying oil on the surface of the baking plate 23 by the oil spray device 120, the sprayed oil is coated from one end to another end of the surface of the baking plate 23 by the wiper cloth 131. This process enables the amount of oil consumption to be reduced and the oil to be uniformly coated on one end to another end of the surface of the baking plate 23.

During operation of the machine 10, one of the oil wipers 130 is in use while another oil wiper is not in use. While the wiper cloth 131 of one oil wiper 130 is exchanged, the wiper cloth 131 of another oil wiper 130 is in use, whereby it is not necessary to stop the operation of the machine.

As shown in Fig.2, at both sides of the baking conveyor 20, a cover 400 is provided. The cover 400 prevents an operator from contacting the baking conveyor carelessly.

Next, the reducer will be explained.

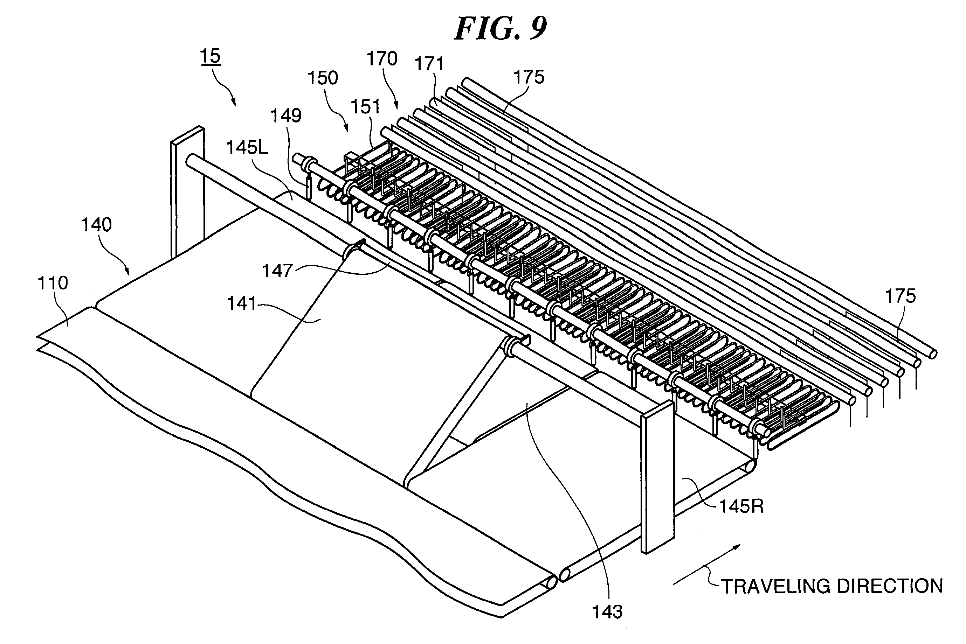

Fig.9 is a perspective drawing showing a whole structure of the reducer.

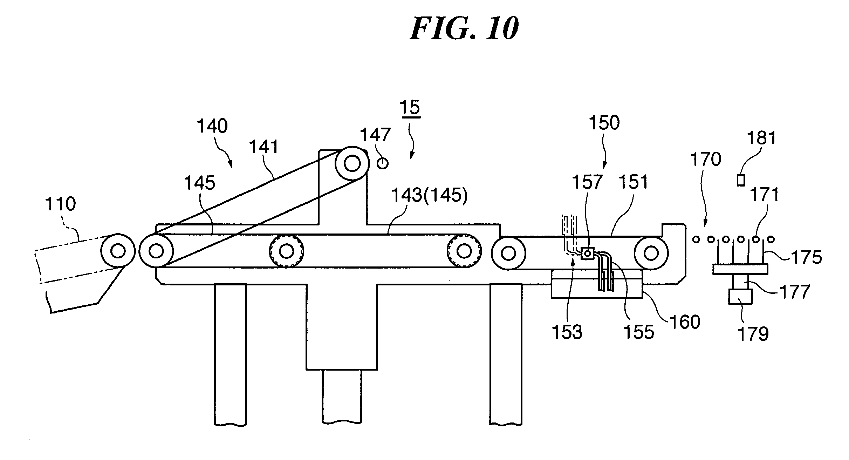

Fig.10 is a cross sectional drawing schematically showing a whole structure of the reducer.

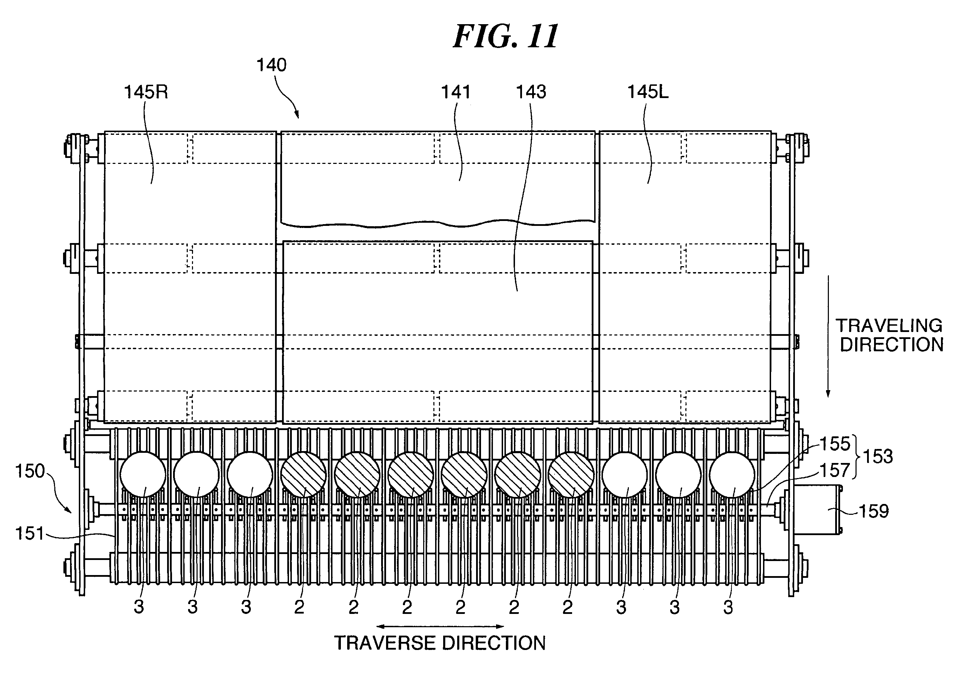

Fig.11 is a plane drawing showing a part of the structure of the reducer.

The reducer 15 will allow the twelve of pancakes removed off the baking plate 23 to be divided into two half groups, the inner face 2b( 3b) of the twelve of pancakes directing upward. Here, one half grope comprises six of pancakes of which the inner faces direct upward( the inner-face-up pancakes), and another half grope comprises six of pancakes of which the outer faces direct upward( the outer-face-up pancakes). Each of the six of inner-face up pancakes will form the lower dough 3 of the sandwich pancake 1 and each of the six of outer-face-up pancakes will form the upper dough 2.

In addition, the reducer 15 serves so that a first row of the one grope having the six of outer-face-up pancakes, and a second row of the another grope having six of inner-face-up pancakes may be alternately arranged to the traveling direction.

The sandwich pancake 1 is produced by sandwiching a filling 4 in between a pair of pancake 2, 3 in such a manner that the inner faces 2b, 3b of the pancake 2, 3 will face each other. In the sandwiching process ( the sandwich device described later), the outer-face-up pancakes are overlaid on the inner-face-up pancakes. At this time, it is preferable that the first row of the outer-face-up baked pancakes and the second row of the inner-face-up pancakes are arranged parallel to the traverse direction, thereby improving operation efficiency and reducing installation space for the machine 10. Accordingly, in the reducer 15, the first row and the second row are alternately arranged to the traveling direction. Also, this enables the width( the size to the traverse direction) of the devices of the machine 10 to be a half of the baking station 11.

As shown in Fig.9 and Fig.10, the reducer 15 is provided with an inverting unit 140, an aligner 150 and a center-shift unit 170 in order from the upstream.

As shown in Fig.9 and Fig.11, the inverting unit 140 is equipped at the downstream of the sheet conveyor 110. The inverting unit 140 has an inverting conveyor 141, followed by a receiving conveyor 143, which are arranged in a middle of the width( the width to the traverse direction) of the inverting unit 140, and left and right non-inverting conveyors 145L and 145R, which are arranged at a left side and a right side of the inverting conveyor 141 and the receiving conveyor 143. These conveyors travel intermittently.

The inverting conveyor 141 and the receiving conveyor 143 serves so that the six of pancakes located at the middle are inverted upside down while being carried. As a result, the six of inner-side-up pancakes are changed to the six of outer-face-up pancakes. Each of these outer-face-up pancakes will form an upper pancake 2 of a sandwich pancake 1.

Each of the left and right non-inverting conveyors 145 carry the six of pancakes( the inner-face-up pancakes) located at the left and right side, without changing these condition. Each of these inner-face-up pancakes will form a lower pancakes 3 of a sandwich pancake 1.

The inverting conveyor 141 is inclined upwardly and, as shown in Fig.10, has a bar 147 extending to the traverse direction at the downstream of the conveyor 141. And, the receiving conveyor 143 is extended from under the inverting conveyor 141 to the downstream.

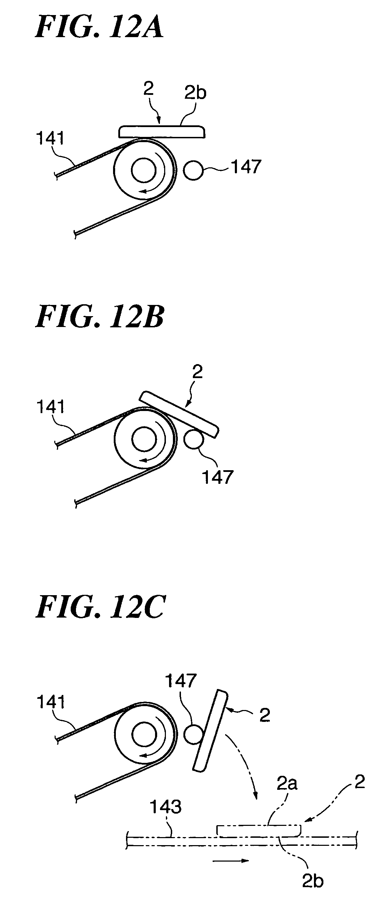

Fig.12 is a drawing explaining a way of inverting the pancake in the inverting unit.

The six of inner-face-up pancakes 2 transferred from the sheet conveyor 110 are carried by the inverting conveyor 141. When they reach the end of the inverting conveyor 141, as shown in Fig.12A, the leading edge of the pancake 2 is removed off the surface of the inverting conveyor 141 and protruded in air. The leading edge protruded in air suffers from gravity force, and the pancake 2 falls off the inverting conveyor 141 with the leading edge thereof in advance, as shown in Fig.12B. At this time, the leading edge of the pancake 2 is touched at the bar 147, as shown in Fig.12C, which makes the pancake 2 to be inverted upside down along the bar 147. As a result, the pancake 2 falls on the receiving conveyor 143 with the outer face 2a thereof upwardly. Therefore, the six of inner-face-up pancakes is changed to the six of outer-face-up pancakes.

As shown in Fig.10, the left and the right non-inverting conveyors 145 are extended to the traveling direction. The six of inner-face-up pancakes transferred to the both conveyors 145 from the sheet conveyor 11 is carried to the most downstream.

In the inverting unit 140, a carrying distance of the pancakes by the left and right non-inverting conveyors 145 is different from a carrying distance of the pancakes by the inverting conveyor 141 and receiving conveyor 143. But, a traveling speed of each of the conveyors is controlled so that a time in which all of the pancakes are carried by such conveyors can be equal.

At the most downstream of these conveyors, the twelve pancakes, including the six of outer-face-up pancakes on the receiving conveyor 143, the three of inner-face-up pancakes on the left non-inverting conveyor 145L and the three of inner-face-up pancakes on the left non-inverting conveyor 145R, are arranged in the traverse direction.

At the downstream of the inverting unit 140, the aligner 150 is equipped. Between the inverting unit 140 and the aligner 150, as shown in Fig.9, an inlet guide 149 having twelve inlets is equipped. The twelve of the pancakes are guided passing the inlet guide 149 to the aligner 150.

As shown in Fig. 11, the aligner 150 has a conveyor 151 comprising a plurality of ropes. On the conveyor 151, the six of inner-face-up pancakes 2 at the middle thereof, the three of outer-face-up pancakes 3 at the left hand, and the three of outer-face-up pancakes 3 at the right hand are arranged in the traverse direction.

The conveyor 151 has a first alignment device 153, which makes the twelve of the pancakes to be aligned with respect to the traveling direction and the traverse direction. The device 153 has an axis 157 extending to the traverse direction and twelve bar assembly units each of comprising four L-shaped bars 155. The bar assembly units are mounted to the axis 157. The axis 157 is rotated to forwards and backwards to the traveling direction by actuator 159 connected thereto.

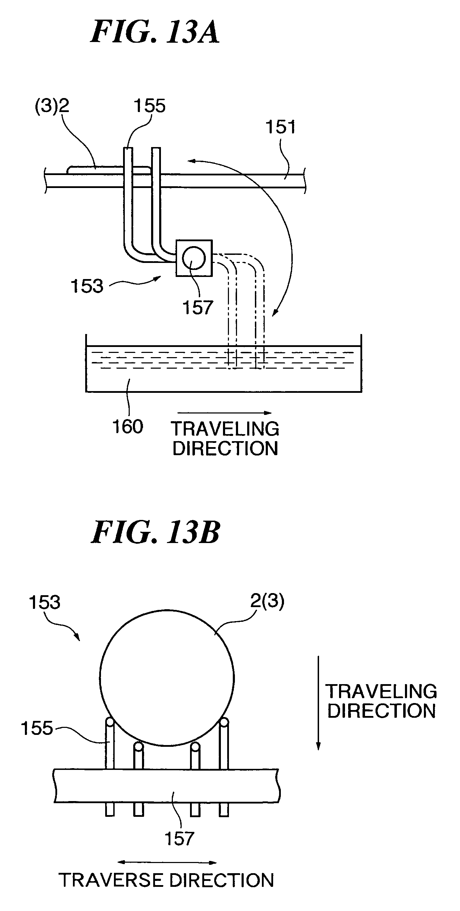

Fig.13 is a drawing explaining a first alignment device, Fig. 13A is a cross-sectional drawing partially showing the first alignment device, Fig. 13B is a plane drawing showing the first alignment device.

When the axis 157 rotates to backwards to the traveling direction activated by the actuator 159, each of the bars 155 of each of the bar assembly units is projected over the conveyor 151 passing through ropes, as shown in Fig. 13A. As shown in Fig.13B, the projected portion of each of bar is arranged in arc in plane. Under the first alignment device 153, an alcohol tank 160 pooled alcohol is disposed. Rotation of the axis 157 to the traveling direction will cause the distal end of each of the bars to immerse in the alcohol tank 160.

Referring to Fig.11 and Fig.13, when the twelve of pancakes are transferred onto the conveyor 151 from the inverting unit 140, the axis 157 of the first alignment device 153 rotates backwards to the traveling direction and the bars 155 are projected over the conveyor 151 passing through the ropes( as shown in Fig.13A). Then, the leading edge of the pancake 2 ( 3) is contacted with the projected portion of the bars 155 and stopped, whereby the pancakes 2 (3) are aligned to the traveling direction and the traverse direction. After alignment of the pancakes, the axis 157 rotates to the traveling direction. That allows the pancakes to be carried to a next process by the conveyor 151. The portion of the bars to which the pancakes are contacted is immersed in the alcohol so as to prevent the portion from adhering to the pancakes.

At the downstream of the aligner 150, the center-shift unit 170 is equipped and serves that a first row having the six of inner-face-up pancakes, and a second row having the six of outer-face-up pancakes are arranged alternately.

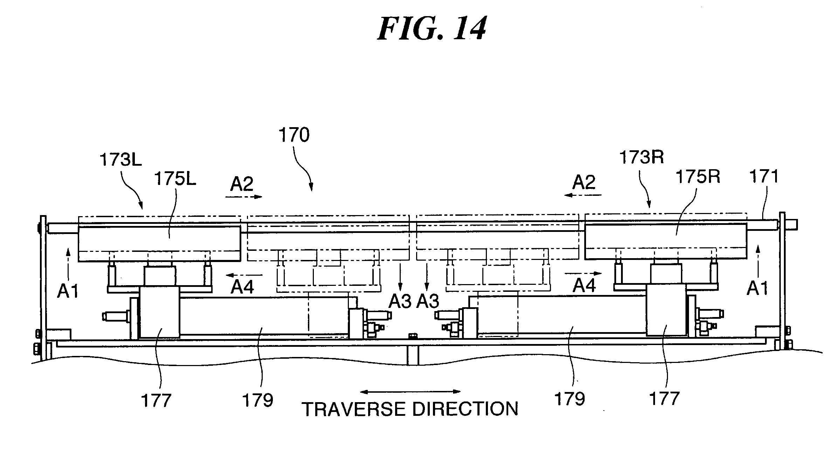

Fig. 14 is an elevation drawing showing a structure of the center-sift station.

Fi.15 is a cross-sectional drawing showing a structure of the center-shift unit.

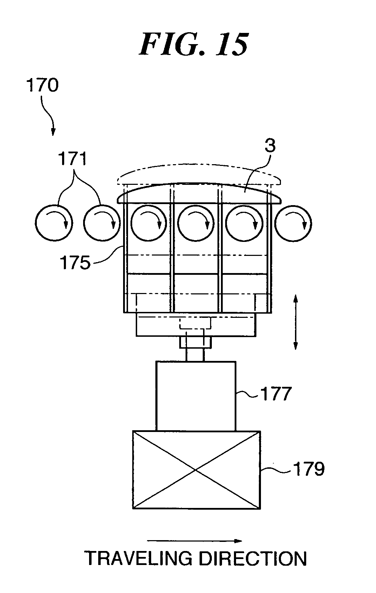

The center-sift unit 170 has a conveyor 171 comprising of six rollers arranged in parallel to the traverse direction, as shown in Fig.9 and Fig.15, and a left and a right sift devices 173L and 173R arranged in a left and right side to the traverse direction. Each of the shift devices 173 has four of sift plates 175 arranged in parallel to the traverse direction between the rollers. Each of the sift plates 175 has a width equal to the width of three of pancakes and a notched upper edge. Each of the shift plates 175 is mounted to a cylinder 177 movable vertically at its lower portion. The cylinder 177 is mounted to a cylinder 179 movable to the traverse direction.

As shown in Fig.14, the left and right sift plates 175 are operated by the cylinder 177 to be moved to a position projected from the conveyor 171 passing between the rollers, as shown in arrow A1 in the figure, and then operated by the cylinder 179 to be moved in the center, as shown in arrow A2 in the figure. Next, the left and right sift plates 175 are operated by the cylinder 177 to be moved downwardly to under the conveyor 171 passing between the rollers, as shown in the arrow A3 in the figure, and last operated by cylinder 177 to be moved to the original position, as shown in the arrow A4 in the figure.

When the pancakes are transferred to the center-sift unit 170, the six of pancakes 2 placed in the middle are carried to the next process by the conveyor 171. At the same time, each of the shift plates 175 are moved upwardly( as shown in the arrow A1 in Fig. 14), thereby the three of pancakes 3 placed at the left side are transferred onto the left shift plates 175L from the conveyor 171, and the three of pancakes3 placed at the right side are transferred onto the right shift plates 175R from the conveyor 171. Then, the left and right shift plates 175 are moved to the center( as shown in the arrow A2 in Fig.14). This makes the three of pancakes 3 on the left shift plates 175L and the three of pancakes 3 on the right shift plates 175R to be gathered in the center. Then, by moving each of the shift plates 175 downwardly, the six of pancakes 3 gathered in the center are transferred onto the conveyor 171 from each of the shift plates 175. Then, the conveyor 171 carries these six of pancakes 3 to the next process. The notched upper edge of the shift plate 175 makes the pancake 3 to be moved without slipping off the shift plates 175.

In the present invention, in order to arrange the first row and the second row alternately, the twelve of the pancakes are divided into two half groups in such a manner that one half group has the six of pancakes which are placed at the middle, and that another half group has the six of pancakes, in which the three of pancakes placed at the left side and the other three of pancakes placed at the right side are moved in the center. So, the moving distance for moving the pancakes placed at the left side and the right side becomes relatively short.

If the twelve of pancakes are divided into two half in such a manner that one half group has the six of pancakes placed at one side, and another half group has the other six of pancakes placed located at another side, in order to arrange one half group and another half group alternately, it is required that the six of pancakes are displaced from one side to another side, whereby the moving distance of the pancakes becomes relatively long. Therefore, the present invention requires rather a short time to move the pancakes, whereby the moving speed can be reduced so as to prevent the pancakes from moving owing to inertia force.

As described above, first, the six outer-face-up pancakes 2 are transferred to a next step, and then the six of inner-face-up pancakes 3 are transferred to the next step.

As shown in Fig.10, above the middle portion of the center-shift unit 170, six of photo sensors 181 are provided. Each of these photo sensors 181 detects whether the six of pancakes are placed in the middle portion or not. If any one of the sensors 181 does not detect, the filling depositing, sandwiching and edge-sealing station 13 does not operate.

Next, the filling depositing, sandwiching and edge-sealing station will be explained.

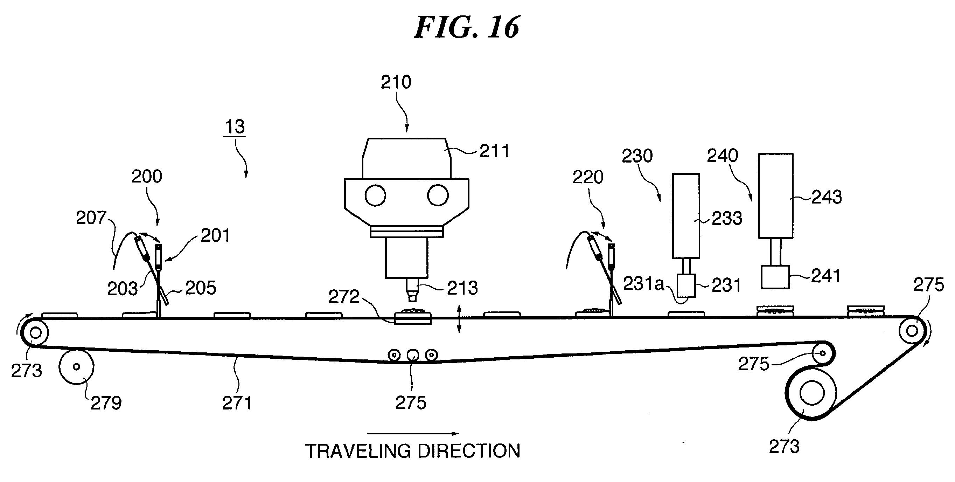

Fig. 16 is a drawing showing a structure of a filling and sandwiching unit in the filling depositing, sandwiching and edge-sealing station.

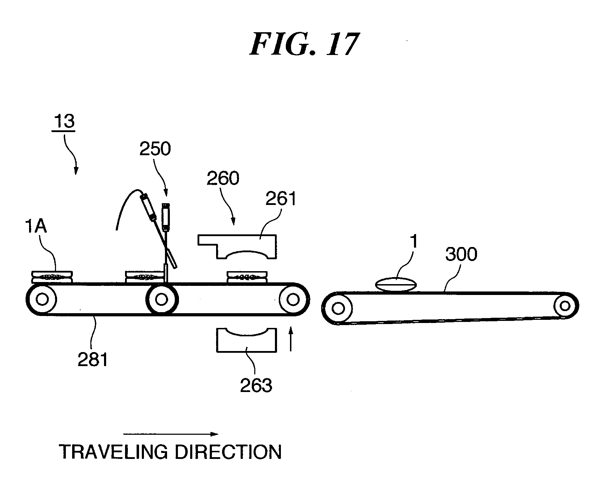

Fig.17 is a drawing showing a structures of an edge-sealing unit in the filling depositing, sandwiching and edge-sealing station.

In the filling depositing and sandwiching unit, as shown in Fig. 16, a second aligner 200 for alignment of the pancakes, a filling depositor 210 for depositing filling on the pancakes, a third aligner 220 for alignment of the pancakes, a heat stamp device 230 for stamping designs on the pancakes, and, a sandwich device 240 for overlaying the two pancakes and sandwiching the filling in between the overlaid pancakes are arranged over an upstream conveyor 271 in order from the upstream.

In the edge-sealing unit, as shown in Fig.17, a forth aligner 250 for alignment of the overlaid pancakes and an edge-sealing device 260 for sealing the edge( periphery) of the overlaid pancakes are arranged over a downstream conveyor 281 in order from the upstream.

The upstream conveyor 271 has a relatively long length, and the downstream conveyor 281 has a relatively short length.

These conveyors travels intermittently, that is to say, these conveyors travel for regular intervals and intermit for regular periods, repeatedly. The devices are located over these conveyors at the regular intervals. Since these conveyors carry the six pancakes arranged in the traverse direction, the width of these conveyor reduces to half of the width of the baking station 11 and the reducer 15.

Referring to Fig. 16, the filling and sandwiching unit will be explained.

The upstream conveyor 271 is made of an endless sheet. On an outer surface of the conveyor 271, a plurality of ribs on which the pancakes are placed are formed circularly. The ribs prevent the pancakes from slipping off and also sticking to the conveyor 271. The conveyor 271 is wound between two rollers 273 via guide rollers 275.

The second aligner 200 has six alignment devices 201 arranged in the traverse direction. Each of the alignment devices 201 has a pair of bars 203. Each of the bars 203 has a plate 205 at its distal end, and the back faces of the plates 205 are directed inwardly each other. Each of the alignment devices 201 moves between a lower position, where the plate 205 is reached to the surface of the conveyor 271, and an upper position, where the plate 205 is apart off the surface of the conveyor 271. To each plate 205, an alcohol applying pipe 207 is connected so as to apply the alcohol onto the back face of the plate 205.

When six of inner-face-up pancakes, carried by the conveyor 271, are reached under the second alignment device 200, the second alignment device 201 moves to the lower position, and then an arc-shaped leading edge each of the pancakes touches the plate 205, whereby the pancakes will be aligned to the traveling direction and to the traverse direction.

At the downstream of the second aligner 200, the filling depositor 210 is equipped. The filling depositor 210 has a hopper 211 filled with the filling 4. The hopper 211 has, at the bottom thereof, six nozzles 213 distributed to the traverse direction. A suitable quantity of filling is deposited on a center position each of the inner-face-up pancakes from each of the nozzles 213. Since such filling operation is carried out during an intermission of the conveyor 271, the filling 4 will be deposited on the center position each of the inner-face-up pancakes.

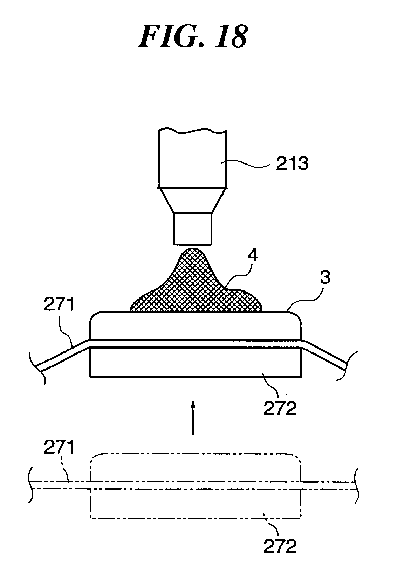

Fig.18 is a drawing showing a way of depositing the filling.

A lift plate 272, which is movable vertically, is equipped under the conveyor 271 at an opposite position from the nozzles 213. When the filling 4 is deposited on a pancake, the lift plate 272 will move upwardly to lift the conveyor 271 up together with the pancake thereon toward the nozzle 213. After depositing the filling 4 onto the pancake, the lift plate 272 moves downwardly to lower the conveyor 271 down together with the pancake thereon so as to shut dripping of the filling 4 off the nozzle 213 easily and sharply.

The conveyor 271 has a sufficient length for getting allowance time to move the conveyor 271 upwardly.

By the way, since a kind of filling may change depending on a product, the filling depositor 210 can be retractable from the machine 10 for cleaning and exchanging fillings.

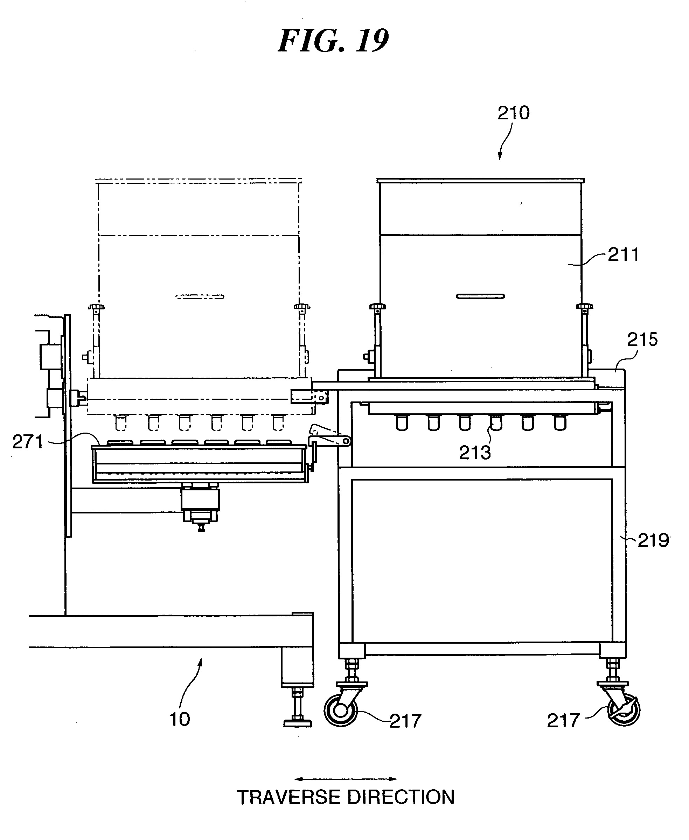

Fig.19 is a drawing showing a way of retracting the filling depositor from the machine.

The hopper 211 is mounted to the frame of the machine 10 in a retractable manner to the traverse direction. That is to say, a carriage 219 having a caster 217 is detachably coupled to the machine 10. On the carriage 219, a guide frame 215 extending to the traverse direction is mounted. When the hopper 211 is cleaned for exchanging filling, first, the carriage 219 is coupled to the machine 10 and then hopper 211 is retracted from the machine 10 to the carriage 219 along the guide frame 215.

Referring to Fig.16, the filling station will be explained.

At the downstream of the filling depositor 210, the third aligner 220 is equipped. The third aligner 220 serves for alignment the outer-face-up pancakes, and has the same structure as that of the second aligner 200.

At the downstream of the third aligner 220, a heat stamp device 230 is equipped. The heat stamp device 230 has six heads 231 distributed in the traverse direction. Each of the heads 231 moves vertically by a cylinder 233. Each of the bottom faces 231a of the heads 231 is provided with a heater( not shown) having the same shape as the design 5( as shown in Fig.24). When the heater is contacted to an outer face of a pancake, the design 5 is stamped on the face.

At the downstream of the heat stamp device 230, the sandwich device 240 is equipped. The sandwich device 240 has six suction pads 241 distributed in the traverse direction. Each of the pads 241 moves vertically by a cylinder 243. When each of pads 241 moves downwardly to be contacted with an upper face of a pancake and the pad 241 sucks in, the pancake is pulled up to the pad 241 by vacuum. Then, the pad 241 with the pancake pulled moves upwardly and moves downwardly when another pancake reaches under the pad 241. And, when the suction is turned off, the pancake pulled to the pad 241 is apart from the pad 241 and placed on another pancake.

Under the lower path in the circulation path of the conveyor 271, an alcohol applying roller 279, as shown in the right side in Fig.16, is equipped. The roller 279 applies the alcohol to the surface of the conveyor 271 so as to prevent sticking the pancake to the conveyor 271.

Next, the operation of each device over the upstream conveyor will be explained.

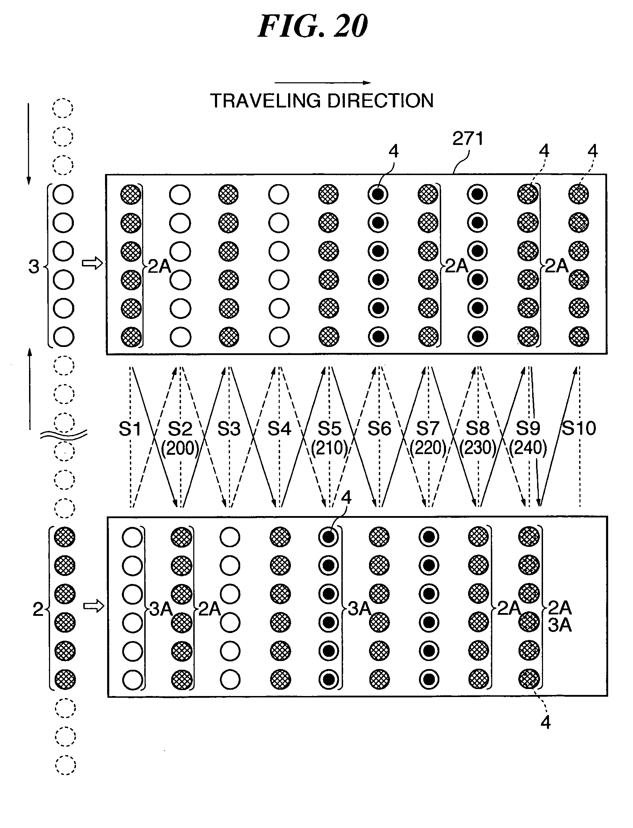

Fig.20 is a drawing explaining a way of processing a pancake.

The upstream conveyor 271 travels intermittently, such as ten intermissions during a travel from the upstream to the downstream of the traveling path of the conveyor 271. And, the above-described devices are located over the conveyor 271 at the regular intervals. In this example, the second aligner 200 is located at a second intermission position S2, the filling depositor 210 is located at a fifth intermission position S5, the third aligner 220 is located at a seventh intermission position S7, the heat stamp device 230 is located an eighth intermission position S8 and the sandwich device 240 is located at a ninth intermission position S9.

The Fig.20 shows a position of a pancake at each of the intermission positions on the conveyor 271. In this figure, a row having six pancakes is alternately carried between positions shown in the upper of the figure, and another positions shown in the lower of the figure. And, a carriage direction of a row having six outer-face-up pancakes is shown in a solid line, and a carriage direction of a row having six inner-face-up pancakes is shown in a dotted line.

First, as shown in the upper figure of Fig.20, a row 2A (a first row) having six outer-face-up pancakes is transferred to the upstream conveyor 271, and then is carried to the first intermission position S1. Next, as shown in the lower figure of Fig.20, at the same time when the first row 2A is carried to the second intermission position S2, a row 3A (a second row) having six inner-face-up pancakes is carried to the first intermission position S1.

When the first row 2A is carried to the seventh intermission position S7 ( as shown in the upper figure in the Fig.20), the six outer-face-up pancakes in the first row 2A are aligned by the third aligner 220.

On the other hand, when the second row 3A is carried to the second intermission position S2( as shown in the lower figure in the Fig.20), the six inner-face-up pancakes in the second row 3A are aligned by the second aligner 200. Then, when the second row 3A is carried to the fifth stop position S5, the filling 4 is deposited on the inner face each of the six inner-face-up pancakes in the second row 3A by the filling depositor 210.

Then, when the first row 2A is carried to the eighth stop position S8, the designs are stamped on the outer face each of the six outer-face-up pancakes in the first row 2A by the heat stamp device 230. And, when the first row 2A is carried to the ninth intermission position S9, the six outer-face up pancakes in the first row 2A are moved upwardly and kept at the moved upward position by the sandwich device 240.

On the other hand, the second row 3A is subsequently carried to the ninth intermission position S9, where the six outer-face-up pancakes in the first row 2A are kept at the upward position. When the second row 3A is carried to the ninth intermission position S9, the sandwich device 240 is so operated that the pads 241, to which the outer-face-up pancakes are pulled up, move downwardly. And then, the suction is turned off. As a result, the outer-face-up pancakes in the first row 2A and the inner-face-up pancakes in the second row 3A are overlaid with the filling 4 on between the pancakes.

By carrying out the above operations repeatedly, the outer-face-up pancake 2 is successively placed onto the inner-face-up pancake with the filling 4 in between thereof.

At a beginning of an intermittently traveling of the conveyor 271, a signal outputted from the photo sensor 181 installed in the center-shift unit 170 is available for operating each device.

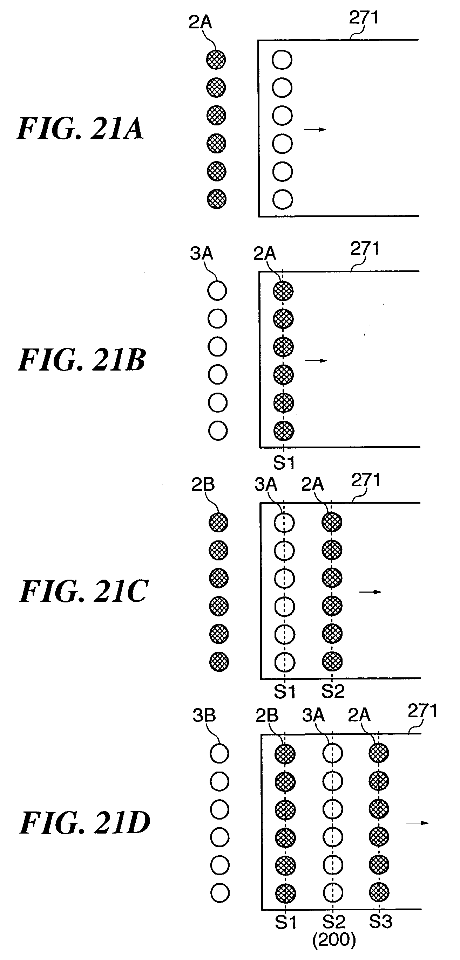

Fig.21 is a drawing explaining an operation timing of each device in the filling, sandwiching and edge-sealing station.

In order to employ the signals outputted from the photo sensors 181, timing for transferring the first row 2A to the conveyor 271 from the aligner 150 has to be matched with timing for intermittently traveling of the conveyor 271.

First, the sensors 181 first detect the first row 2A, as shown in Fig 21A, and second, detect the second row 3A, as shown in Fig. 21B. Then, they detect a third row 2B having six outer-face-up pancakes, as shown in Fig.21C. When the sensors 181 detect a forth row 3B having six inner-face-up pancakes, as shown in Fig. 21D, the second row 3A is carried to the second intermission position S2. At this time, the second aligner 200 operates so as to align the six outer-face-up pancakes in the second row 3A.

That is, when the sensors 181 detect four times, the second aligner 200 may be operated.

When the sensors 181 detect seven times and the first row 2A is carried to the fifth intermission position S5, the filling depositor 210 operates to deposit the filling 4 onto the pancake.

Then, each device is operated at the regular periods.

As described above, in the filling depositing, sandwiching and edge-sealing station 13, the filling operation is carried out after the six inner-face-up pancakes are aligned by the second alignment device 200 so that the filling 4 is deposited at a suitable position on the inner face each of the pancakes. And, the heat stamping operation is carried out after the six outer-face-up pancakes are aligned by the third alignment device 220 so that the design 5 is stamped on a suitable position on the outer face each of the pancakes. And, also the overlaying operation is carries out after aligning the six outer-face-up pancakes and the six inner-face-up pancakes so that each of the six outer-face-up pancakes ( upper pancakes) is directly overlaid on each of the six inner-face-up pancakes( lower pancakes).

As shown in Fig. 17, the edge-sealing unit will be explained.

The downstream conveyor 281, over which the edge-sealing device 260 is equipped, is made of a plurality of endless ropes. At the upstream of downstream conveyor 281,the fifth aligner 250 having the same structure as that of the second aligner 200 is equipped. When a row of overlaid pancakes 1A is transferred to the downstream conveyor 281, the pancakes in the row 1A will be aligned by the forth aligner 250.

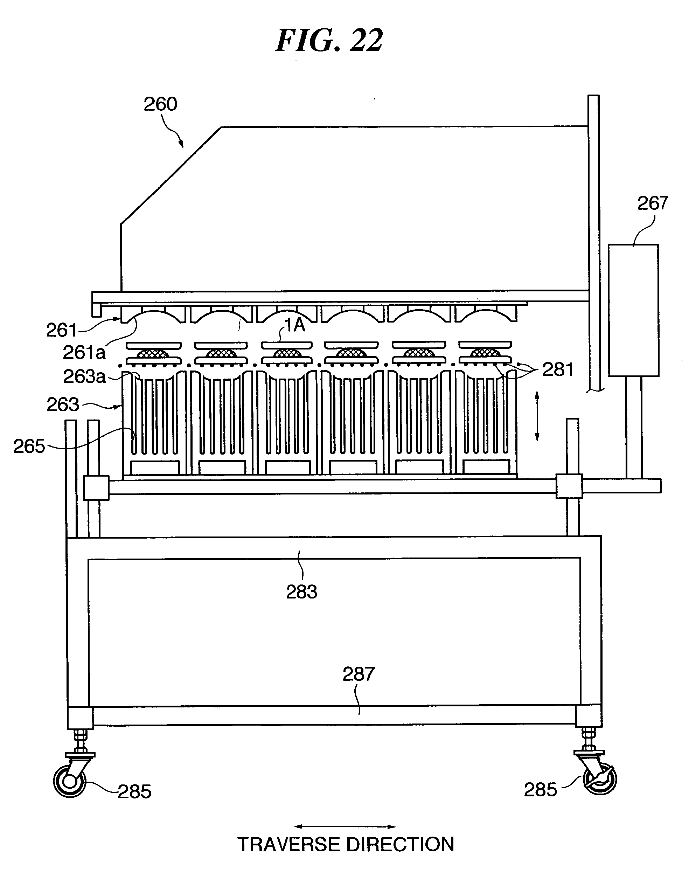

Fig.22 is an elevation drawing showing a structure of the edge-sealing device.

At the downstream of the fifth aligner 250, the edge-sealing device 260 is equipped. The edge-sealing device 260 has a die, which comprise of an upper die 261 and a lower die 263. The upper die 261 is fixed to the frame of the machine 10 and has, at the bottom, face six concave die faces 261a. On the other hand, the lower die 263 is movably disposed under the conveyor 281, and has, at the upper face, six concave die faces 263a and a plurality of grooves 265 for passing the ropes of the conveyor 281. The lower die 263 moves between an upper position where the die face 263a is over the conveyor 281 and close to the upper die 231, and a lower position where the die face 263a is under the conveyor 281, by a cylinder 267 connected thereto. While the lower die 263 is moving to the upper position, the ropes of the conveyor 281 are passing between the grooves 265.

When the row 1A of overlaid pancakes is carried under the edge-sealing device 260, the lower die 263 moves to the upper position. During such movement , the overlaid pancakes are transferred to the die faces 263a of the lower die 263 from the conveyor 281, and the overlaid pancakes is moved toward the die face 261a of the upper die 261. Then, matching the upper die 261 with the lower die 263 makes the overlaid pancakes to be formed as sandwich pancakes. Thus, a sandwich pancake 1, having such a shape that the center thereof is thick with the filling 4 and sealed at its edge, is produced.

The produced sandwich pancake 1 is transferred to the next processes( inspection process, packaging process) by a discharge conveyor 300.

The lower die 263 of the edge-sealing device 260 is retractable from the machine 10. The lower die 263 and the cylinder 267 are mounted to a base 283, which is connected to a carriage 287 having a caster 285. The carriage 287 is retractable from the machine 10 to the traverse direction. When the carriage 287 is retracted from the machine 10, a space where the lower die 263 was placed will be open. Thus, it will be easy to clean between each of the ropes of the conveyor 281 and a pulley( not shown) on which the conveyor 281 is wound.

Moreover, the machine is provided with a discharge mechanism for discharge the baked dough( single pancake).

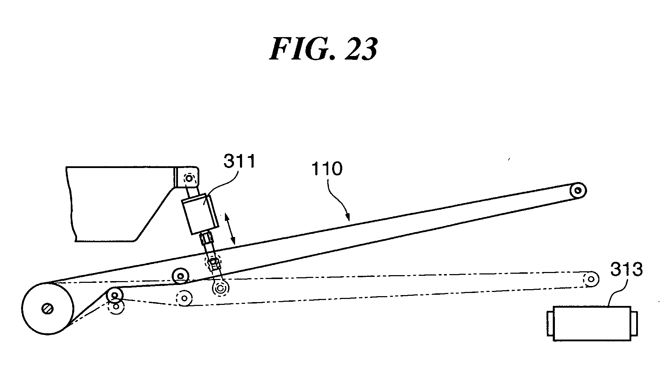

Fig.23 is a drawing showing the structure of the pancake discharge mechanism.

The discharge mechanism has a cylinder 311 for declining the sheet conveyor 110 of the baking station 11 and a bypass conveyor 313 disposed under the sheet conveyor 110. When the sheet conveyor 110 is declined by the cylinder 311, the pancake on the sheet conveyor 110 will be transferred onto the bypass conveyor 313, not onto the reducer 15.

If a trouble once occurs in the following processes, the discharge mechanism will prevent transferring pancakes to the subsequent process under trouble.

### Effect of the Invention

According to the present invention, the continuous traveling of the baking plate conveyor leads to improvement in productivity of sandwich pancakes. For, example, the continuous traveling of the conveyor makes it possible to deposit dough in a circle shape on the baking plate conveyor without stopping the traveling of the conveyor. And, a wiper cloth of an oil wiper is exchangeable for new wiper cloth without stopping the traveling of the conveyor.

Since the baking plate is coated with oil uniformly, dough will be baked in a good condition. Moreover, in the reducer, pancakes can be moved in a short time without slippage of the pancakes. Further, if a trouble once occurs in the following processes, the discharge mechanism will prevent transferring pancakes to the subsequent process under trouble. Accordingly, a large number of sandwich pancakes of quality can be mass-produced.

And, the edge-sealing device and the filling depositor are retractable from the machine so that they may be easily inspected and cleaned for hygienical maintenance. Further, the filling depositor is also retractable from the machine, whereby kinds of filling will be easily exchangeable.

In addition, the cover provided to the baking plate conveyor leads to big improvement in safety.

## Claims

1. A sandwich pancake machine comprising:
a baking plate conveyor having a plurality of baking plates which are circularly coupled and travels along a circulation path;
a dough depositor for depositing a suitable quantity of dough at predetermined positions on a surface of said baking plate arranged in a crossing direction to a traveling direction of said baking conveyor, the dough depositor being disposed over said baking plate conveyor;
a turn-over device for turning over the dough of which one face( an outer face of a sandwich pancake) has been baked by said baking plate, whereby the opposite face( an inner face of a sandwich pancake) is subjected to direct contact with said baking plate;
a scraper for removing the baked dough( single pancake) off said baking plate;
a reducer for dividing the group of the removed baked dough into two half groups, one half directing the inner face of the baked dough upward( refer to the inner-face-up baked dough) and another half directing the outer face of the baked dough upward( refer to the outer-face-up dough);
a filling depositor for depositing a filling on the inner-face-up dough;
a sandwich device for overlaying the outer-face-up dough on the inner-face-up dough deposited with the filling and sandwiching the filling in between the pair of baked dough; and
an edge-sealing device for sealing the edge of the overlaid dough;
wherein said baking conveyor travels continuously, and said dough depositor and said turn-over device operate while moving synchronously with said baking conveyor.

2. The sandwich pancake machine according to claim 1, further comprising a spray injection type oil applying device for injecting oil on a surface of said baking plate.

3. The sandwich pancake machine according to claim 1, further comprising double oil wipers for wiping oil to a surface of said baking plate.

4. The sandwich pancake machine according to claim 1, further comprising a sensor for sensing a temperature of a surface of said baking plate, wherein an amount of gas supplied to a burner for heating said baking conveyor will be controlled based on the sensed temperature.

5. The sandwich pancake machine according to claim 1, further comprising a cleaner for removing remaining pieces of the dough off said baking plate.

6. The sandwich pancake machine according to claim 1, wherein said reducer carries a plurality of baked dough removed off said baking plate, as being arranged in a row and in a right-angled direction to the traveling direction of said conveyor,
the row being divided into a first-half row and a second-half row, each half row having half number of the baked dough,
in the first-half row, wherein the baked dough, which was placed in the middle of the row, is inner-face-up( or outer-face-up),
in the second-half row, wherein the baked dough, which was placed at left and right edges in the row, was gathered in the middle, the baked dough in the second-half row being outer-face-up( or inner-face-up).

7. The sandwich pancake machine according to claim 1, wherein said edge-sealing device is retractable from said machine.

8. The sandwich pancake machine according to claim 1, wherein said filling depositor is retractable from said machine.

9. The sandwich pancake machine according to claim 1, further comprising a bypass conveyor for discharging the baked dough to another position different from said filling depositor.

10. The sandwich pancake machine according to claim 1, further comprising an alcohol applying means for applying alcohol to parts which are directly contact with the dough.

11. A process for mass-producing sandwich pancakes comprising the steps of:
depositing dough on a surface of a baking plate of a baking conveyor, said baking plate conveyor which a plurality of baking plates are circularly coupled and travels in a circular path, at a plurality of positions arranged at a crossing direction to the traveling direction of said conveyor, the step being carried out by a dough depositor;
turning over the dough of which one side is baked by said baking plate in order to be subject the opposite side thereof to direct contact with said baking plate, the step being carried out by a turn-over device;
dividing the grope of the baked dough into two half groups, one half directing the inner face of the baked dough upward( refer to the inner-face-up baked dough) and another half directing the outer face of the baked dough upward( refer to the outer-face-up baked dough), after removed off said baking plate;
depositing a filling on the inner-face-up baked dough;
overlaying the outer-face-up baked dough on the inner-face-up baked dough deposited with the filling;
sealing the periphery (edge) of the pair of dough ;
wherein said baking plate conveyor continuously travels, and said dough depositor and said turn-over device are operated with being synchronously traveled with said baking plate conveyor.

12. The process for mass-producing sandwich pancakes according to claim 11, further comprising a step of controlling an amount of gas supplied to a burner for heating said baking conveyor, based on the temperature of the surface of the baking plate conveyor.

13. The process for mass-producing sandwich pancakes according to claim 11, further comprising a step of applying alcohol to parts which are directly contact with the dough as to prevent sticking the baked dough to the parts.
